# EUROPEAN PATENT APPLICATION

(11) **EP 4 804 379 A1**
(43) Date of publication of application: **09.09.2026**
(21) Application number: 25305302.9
(22) Date of filing: 06.03.2025
(51) Int. Cl.: H02J 50/10, B60L 5/00, H02M 1/00, H02M 1/08

(54) **TRANSMITTER, RECEIVER AND METHOD FOR WIRELESSLY CHARGING THE POWER STORAGE UNIT OF AN ELECTRICAL VEHICLE, AND ELECTRICAL VEHICULE COMPRISING SUCH A RECEIVER**

(71) Applicant: Université Clermont Auvergne, 63000 Clermont-Ferrand (FR); Centre National de la Recherche Scientifique, 75016 Paris (FR); Clermont Auvergne INP, 63170 Aubière (FR)
(72) Inventor: LIANG, Mincui, 63170 Aubière (FR); EL KHAMLICHI DRISSI, Khalil, 63800 Cournon (FR); PASQUIER, Christophe, 63111 Dallet (FR)
(74) Representative: Novagraaf Technologies

(57) **Abstract**

A method is disclosed for controlling a transmitter (20, 30) for wirelessly charging a power storage unit of an electric vehicle comprising a receiver (22, 32 with a secondary resonant circuit (L2, C2). The transmitter comprises a first resonant circuit (L1, C1), an inverter (23) with switches (SW1, SW2, SW3, SW4) and a driver (24) to control the inverter. The method comprises receiving by the driver (24), from a controller (25, 35), commands to set the switches of the inverter (23) in a first position when the instantaneous inductor current (i₁, i₂) in the primary/secondary inductor (L1, L2) passes through zero in one direction, and in a second position when the instantaneous inductor voltage (v_{L1}, v_{L2}) across the primary/secondary inductor (L1, L2) reaches a voltage reference, or when a quantity representative of a total instantaneous power stored in the primary/inductor (L1, L2) reaches a power reference.

## Description

### TECHNICAL FIELD

The present disclosure relates to a transmitter and a receiver for wirelessly charging a power storage unit of an electrical vehicle comprising the receiver. It also relates to an electrical vehicle comprising such a receiver and to a method for wirelessly charging the power storage unit of such an electrical vehicle.

### BACKGROUND

Wireless charging technology for vehicle batteries employs resonant power transfer circuits to facilitate energy transfer without physical connections. Such systems operate on the principle of electromagnetic resonance, where a transmitter and a receiver tuned to the same frequency can exchange energy efficiently. In static applications, vehicles are charged when parked over a charging pad that contains a transmitter comprising a primary resonant circuit. This setup generates a magnetic field, which resonates with a secondary resonant circuit in a receiver placed in the vehicle, thus transferring power wirelessly. Dynamic wireless charging extends this concept to vehicles in motion by embedding transmitters comprising primary resonant circuits along roadways. As vehicles pass over these primary resonant circuits, they receive power through resonant magnetic fields, enabling charging on the go and potentially reducing the need for frequent stops to recharge. This technology offers the convenience of charging without stopping and has the potential to reduce power storage unit size and extend vehicle range.

Transferring energy in an optimal way from the primary resonant circuit in the transmitter to the secondary resonant circuit in the receiver is particularly critical in dynamic wireless charging as the vehicle is in motion. The faster the vehicle travels, the less time there is for any given section of the road's embedded transmitters to align with and effectively transfer energy to the vehicle's receiver. This requires the system to be highly efficient at transferring power quickly.

Wireless transfer of energy to recharge electrical vehicles generally remains an important subject of research.

### SUMMARY

According to an aspect, a transmitter is disclosed for wirelessly charging a power storage unit of an electric vehicle. The electric vehicle comprises a power storage unit to be charged and a receiver. The transmitter comprises at least one primary capacitor, at least one primary inductor, and at least one inverter associated with a driver. The inverter comprises at least one branch of switches controlled by the driver to wirelessly transfer power from the transmitter to the receiver. The receiver comprises at least one secondary capacitor and one secondary inductor. The driver is configured to receive commands from a controller to set the switches of the inverter in a first position when the instantaneous inductor current in the primary or in the secondary inductor passes through zero in one direction, and in a second position when the instantaneous inductor voltage across the primary or the secondary inductor reaches a voltage reference or when a quantity representative of a total instantaneous power stored in the primary or in the secondary inductor reaches a power reference.

The controller can be in the transmitter or in the receiver.

According to another aspect, a receiver is disclosed comprising at least one secondary capacitor and one secondary inductor, for wirelessly charging a power storage unit of an electric vehicle when the vehicle is over a transmitter. The transmitter comprises at least one primary capacitor, at least one primary inductor, and at least one inverter associated with a driver. The inverter comprises at least one branch of switches controlled by the driver to wirelessly transfer power from the transmitter to the receiver. The receiver comprises a controller configured to generate commands for the driver to set the switches of the inverter in a first position when the instantaneous inductor current in the secondary inductor passes through zero in one direction, and in a second position when the instantaneous inductor voltage across the secondary inductor reaches a voltage reference, or when a quantity representative of a total instantaneous power stored in the secondary inductor reaches a power reference.

According to another aspect a method is disclosed for controlling a transmitter for wirelessly charging a power storage unit of an electric vehicle, the electric vehicle comprising a receiver comprising at least one secondary capacitor and one secondary inductor, the transmitter comprising at least one primary capacitor, at least one primary inductor, an inverter, and a driver, the inverter comprising at least one branch of switches controlled by the driver to wirelessly transfer power from the transmitter to the receiver. The method comprises receiving by the driver, from a controller in the transmitter or in the receiver, commands to set the switches of the inverter in a first position when the instantaneous inductor current in the primary or the secondary inductor passes through zero in one direction, and in a second position when the instantaneous inductor voltage across the primary or the secondary inductor reaches a voltage reference or when a quantity representative of a total instantaneous power stored in the primary or in the secondary inductor reaches a power reference.

According to another aspect, a method for controlling a transmitter for wirelessly charging a power storage unit of an electric vehicle, the electric vehicle comprising a receiver comprising at least one secondary capacitor and one secondary inductor, the transmitter comprising at least one primary capacitor, at least one primary inductor, an inverter, and a driver, the inverter comprising at least one branch of switches controlled by the driver to wirelessly transfer power from the transmitter to the receiver. The method comprises sending to the driver, from a controller in the receiver, commands to set the switches of the inverter in a first position when the instantaneous inductor current in the secondary inductor passes through zero in one direction, and in a second position when the instantaneous inductor voltage across the secondary inductor reaches a voltage reference or when a quantity representative of a total instantaneous power stored in the secondary inductor reaches a power reference.

Setting the switches of the inverter in the first position when the instantaneous inductor current in the primary or in the secondary inductor passes through zero is known as zero-crossing switching.

The disclosed solution allows controlling the instant (or switching point) when the switches are set in the second position. This is referred to as controlled switching in the following of the description.

Controlled switching as disclosed herein is achieved by setting the switches of the inverter in the second position when the instantaneous inductor voltage across the primary or the secondary inductor reaches the voltage reference or when a quantity representative of a total instantaneous power stored in the primary or in the secondary inductor reaches the power reference.

In this way, an automated switching is provided at optimized instants determined based on a set point (the voltage or power reference). The transfer of energy starts as soon as an instantaneous inductor current is detected, and it is adjusted automatically to the set point. The system reaches a steady state in only a few switching cycles (less to 1 ms), providing a fast transient response.

The embodiments disclosed herein have the advantage of providing a self-protection feature by limiting the voltage across the capacitors and the current in the inductors. It also provides automatic set down of the system when there is no coupling between the two resonant circuits, resulting into input and output power being closed to zero. The input power is also set automatically to zero in case of load short circuit, avoiding the risk of current raising to infinity.

Another advantage of the disclosed embodiments is that there is no need to use any data communication from the receiver to the transmitter to signal its approach and initiate power transfer. With the disclosed embodiments, the instantaneous current in the primary or secondary inductor is immediately detected and the transfer can be triggered without delay.

The zero-crossing switching and the controlled switching can be triggered based on current measurements (and optionally voltage measurements) made in the primary resonant circuit (the transmitter) or in the secondary resonant circuit (the receiver). When the measurements and calculations are done in the secondary resonant circuit, the receiver generates a command by applying the zero-crossing switching and controlled switching strategy described above for the driver of the transmitter to set the switches accordingly.

In a first embodiment, when the controller is in the transmitter, the transmitter comprises a current sensor to obtain the instantaneous current in the primary inductor and in the primary capacitor, and the controller is configured to calculate an instantaneous capacitor voltage across the primary capacitor from the instantaneous current in the primary capacitor, and calculate the instantaneous inductor voltage across the primary inductor by adding the instantaneous capacitor voltage across the primary capacitor and the voltage across the inverter. Or, when the controller is in the receiver, the receiver comprises a current sensor to obtain the instantaneous current in the secondary inductor and in the secondary capacitor, and the controller is configured to calculate an instantaneous capacitor voltage across the secondary capacitor from the instantaneous current in the secondary capacitor, and calculate the instantaneous inductor voltage across the secondary inductor by adding the instantaneous capacitor voltage across the secondary capacitor and the voltage across the power storage unit.

This first embodiment is advantageous cost wise because it requires only one current sensor to obtain the instantaneous inductor current and derive the instantaneous capacitor voltage from the instantaneous inductor current.

Alternatively, in a second embodiment, when the controller is in the transmitter, the transmitter comprises a current sensor to obtain an instantaneous inductor current in the primary inductor, and a first voltage sensor to obtain an instantaneous inductor voltage across the primary inductor. Or, when the controller is in the receiver, the receiver comprises a current sensor to obtain an instantaneous inductor current in the secondary inductor, and a first voltage sensor to obtain an instantaneous inductor voltage across the secondary inductor.

This second embodiment requires one current sensor to obtain the instantaneous inductor current in the inductor and one voltage sensor to obtain the instantaneous voltage across the inductor, which increases accuracy compared with the first embodiment.

Alternatively, in a third embodiment, when the controller is in the transmitter, the transmitter comprises a second voltage sensor to obtain an instantaneous capacitor voltage across the primary capacitor, and the controller is configured to calculate a backup for the instantaneous inductor voltage across the primary inductor by adding the instantaneous capacitor voltage across the primary capacitor and the voltage across the inverter. Or, when the controller is in the receiver, the receiver comprises a second voltage sensor to obtain an instantaneous capacitor voltage across the secondary capacitor, and the controller is configured to calculate a backup for the instantaneous inductor voltage across the secondary inductor by adding the instantaneous capacitor voltage across the secondary capacitor and the voltage across the power storage unit.

This third embodiment provides a backup solution in case of failure of the first voltage sensor.

In another embodiment, the controller is further configured to receive the power or the voltage reference from the vehicle. For example, the set point (corresponding to the voltage or power reference) can be defined by a user of the vehicle. Alternatively, the controller is further configured to receive the power reference or the voltage reference from a network manager. For example, the network manager may decide to adjust the power transferred to the electrical vehicle depending on the global demand.

In an embodiment, the transmitter is integrated into a roadway for wirelessly charging the power storage unit of a vehicle when the vehicle passes over the transmitter.

In another aspect, a roadway is disclosed comprising a plurality of transmitters as described herein for wirelessly charging the power storage unit of a vehicle when the vehicle passes over the transmitters.

In another aspect, an electric vehicle is disclosed which comprises a receiver as disclosed herein.

In an embodiment, the disclosed electric vehicle is configured to provide the voltage or the power reference to the controller.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is a schematic representation of different configurations of resonant wireless power transfer system.
FIG.2 is a schematic representation of a series-series configuration of a resonant wireless power transfer system, when the controller is in the transmitter.
FIG.3 is a schematic representation of a series-series configuration of a resonant wireless power transfer system, when the controller is in the receiver.
FIG.4. is a schematic representation of a pulse obtained based on a the zero-crossing switching and controlled switching strategy disclosed herein and used to command the driver of FIG.2 and 3.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

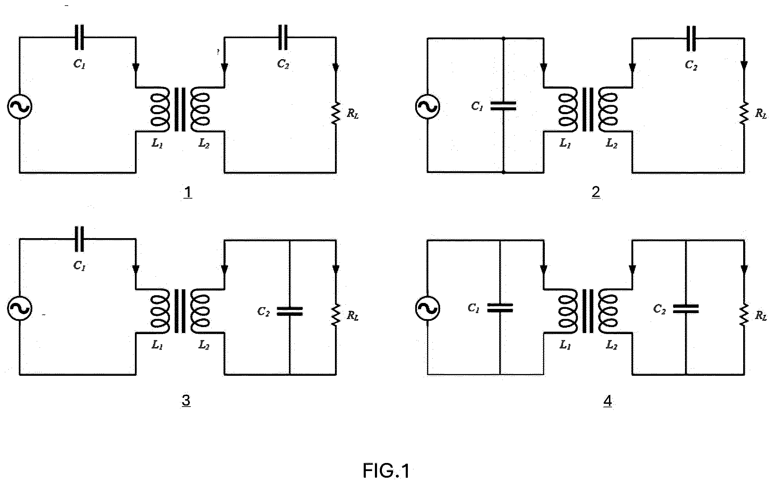

Various configurations of resonant wireless power transfer system exist. In FIG.1 four configurations are schematically represented by way of example. Configuration 1 is referred to as series-series. It comprises on the transmitter side a primary resonant circuit comprising a capacitor C1 and a primary inductor L1 connected in series to a power source E, and on the receiver side, a secondary resonant circuit comprising a capacitor C2 and a secondary inductor L2 connected in series to the power storage unit represented as a load R_{L}. Configuration 2 is referred to as parallel series. In this second configuration, the primary capacitor C1 and the primary inductor L1 are connected in parallel rather than being connected in series. Configuration 3 is referred to as series parallel. In this third configuration, the secondary capacitor C2 and the secondary inductor are connected in parallel rather than being connected in series. And configuration 4 is referred to as parallel-parallel. In this fourth configuration, the primary capacitor C1 and the primary inductor L1 are connected in parallel, and the secondary capacitor and the secondary inductor are also connected in parallel.

The following of the description will relate to a series-series configuration because this is the most straightforward and favorable configuration to achieve a high efficiency in wireless power transfer. This is not limitative, however. The solution disclosed herein may be adapted to other configurations, for example but not limited to the configurations described above by reference to FIG.1.

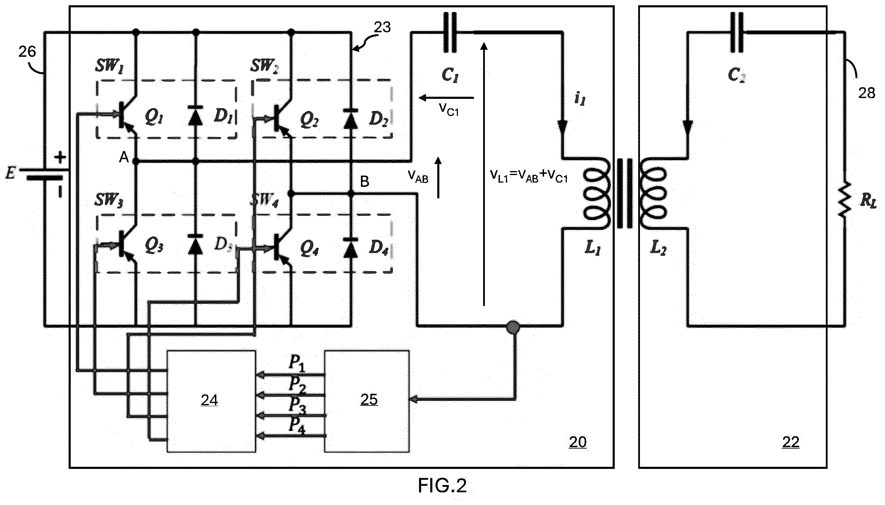

FIG.2 provides an exemplary description schematic representation of a series-series configuration of a resonant wireless power transfer system comprising a transmitter 20 and a receiver 22. The transmitter comprises an inverter 23, a driver 24 and a controller 25. The driver receives input pulses P1, P2, P3 and P4 (or commands) from the controller 25 to set the switches of the inverter 23. The inverter 23 represented on FIG.2 is a full bridge inverter composed of four switches SW1 SW2, SW3 an SW4. Each switch is represented as a transistor Q1, Q2, Q3, Q4 respectively, connected in parallel with a diode D1, D2, D3 and D4 respectively. The diodes are typically connected in an anti-parallel orientation to the transistors. This means that if the transistor is conducting, the diode is reverse-biased and does not conduct. Conversely, when the transistor is off, the diode is forward-biased and can conduct if necessary. The diodes ensure that current does not flow back into the transistors when they are off and protect against potential damage from voltage spikes.

The switches are controlled in pairs: SW1 and SW4 on the one hand and SW2 and SW3 on the other hand to turn them on and off alternatively to connect or disconnect the primary resonant circuit to the power source E and create an alternative output from the continuous input E. The primary inductor L1 is traversed by the alternative current at the output of the inverter 23 which generates an oscillating magnetic field. The oscillating magnetic field is captured by the secondary inductor L2 when positioned within the proximity of the primary inductor's field. This induces a voltage across the terminal of the secondary inductor so that energy is transferred to the receiver.

The transmitter 20 is connected to the power source E via an input DC bus 26. When the transmitter is integrated into a roadway for wirelessly charging the power storage unit of a vehicle, the bus 26 is a distributed input DC bus. The receiver 22 is in a vehicle (not represented) which comprises a power storage unit and an continuous bus 28. The power storage unit represented as a load R_{L} and the receiver 20 are connected to the continuous bus 28.

The transmitter 20 comprises at least one current sensor (not represented) to obtain the current i₁ in the primary inductor L1 and in the primary capacitor C1. In a first embodiment, the controller 25 is configured to calculate an instantaneous capacitor voltage v_{C1} across the primary capacitor C1 from the instantaneous current i₁ in the primary capacitor C1, and to calculate the instantaneous inductor voltage v_{L1} across the primary inductor L1 by adding the instantaneous capacitor voltage v_{C1} across the primary capacitor C1 and the voltage v_{AB} across the inverter 23 (which is known). This embodiment is cost efficient as it only requires one sensor.

In an alternative embodiment, the transmitter 20 comprises a first voltage sensor (not represented) in addition to the current sensor, to obtain directly the instantaneous voltage v_{L1} across the primary inductance L1 rather than deriving V_{L1} from calculations. This embodiment may provide increased accuracy.

In another alternative embodiment, the transmitter 20 comprises a second voltage sensor (not represented) in addition to the current sensor and the first voltage sensor. The second voltage sensor provides the instantaneous capacitor voltage V_{C1} across the primary capacitor C1 as a backup which can be used in case of failure of the first voltage sensor. In this embodiment, the controller 25 is configured to calculate a backup for the instantaneous inductor voltage v_{L1} across the primary inductor L1 by adding the instantaneous capacitor voltage V_{C1} across the primary capacitor C1 and the voltage v_{AB} across the inverter 23.

The controller 25 is configured to provide pulses P1 to P4 to the driver 24 so as to apply the following switching strategy: the switches of the inverter 23 are set in a first position (opened or respectively closed) when the instantaneous inductor current i₁ in the primary inductor L1 passes through zero in one direction (zero-crossing switching) and in a second position (closed, respectively opened) when the instantaneous inductor voltage v_{L1} across the primary inductor L1 reaches a voltage reference v_{R} or when a quantity representative of a total instantaneous power w₁=i₁*v_{L1} stored in the primary inductor reaches a power reference w_{R} (controlled switching).

It will be understood that, for one pair of switches, the first position is an opened position and the second position is a closed position. Whereas for the other pair of switches the first position is a closed position and the second position is the opened position.

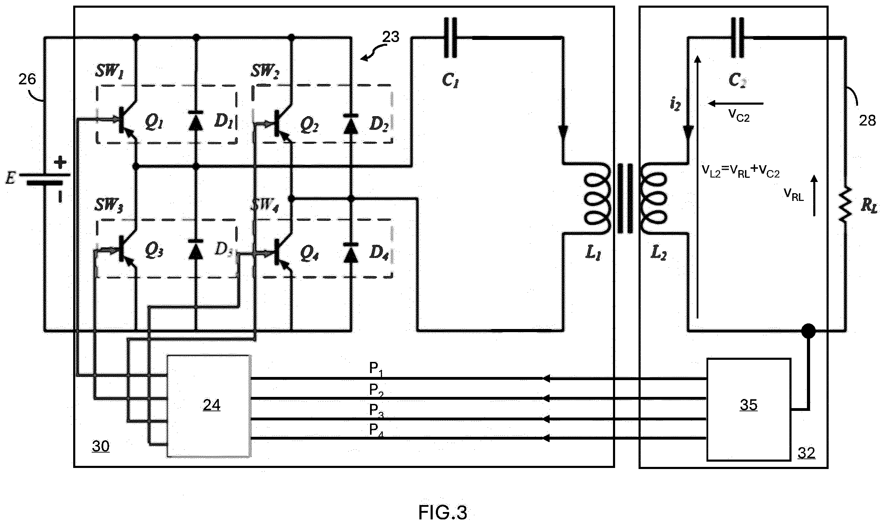

In FIG.2, the controller 25 is in the transmitter 20. FIG.3 represents an alternative embodiment of a series-series configuration of a resonant wireless power transfer system comprising a transmitter 30 and a receiver 32, where the controller, referenced 35, is in the receiver 32. In this embodiment the driver 24 in the transmitter 30 receives the pulses P1, P2, P3, P4 generated by the controller 35. Similar arrangements of sensors can be used in the receiver 32 as those described with reference to FIG.2.

In an embodiment, the receiver 35 comprises at least one current sensor (not represented) to obtain the current i₂ in the secondary inductor L2 and in the secondary capacitor C2. In a first embodiment, the controller 35 is configured to calculate an instantaneous capacitor voltage v_{C2} across the primary capacitor C2 from the instantaneous current i₂ in the secondary capacitor C2, and to calculate the instantaneous inductor voltage v_{L2} across the secondary inductor L2 by adding the instantaneous capacitor voltage v_{C2} across the secondary capacitor C2 and the voltage v_{RL} across the power storage unit represented as a load R_{L} (which is known from the power storage unit management system of the vehicle). This embodiment is cost efficient as it only requires one sensor.

In an alternative embodiment, the receiver 32 comprises a first voltage sensor (not represented) in addition to the current sensor, to obtain directly the instantaneous voltage v_{L2} across the secondary inductance L2 rather than deriving v_{L2} from calculations. This embodiment may provide increased accuracy.

In another alternative embodiment, the receiver 32 comprises a second voltage sensor (not represented) in addition to the current sensor and the first voltage sensor. The second voltage sensor provides the instantaneous capacitor voltage V_{C2} across the secondary capacitor C2 as a backup which can be used in case of failure of the first voltage sensor. In this embodiment, the controller 35 is configured to calculate a backup for the instantaneous inductor voltage v_{L2} across the secondary inductor L2 by adding the instantaneous capacitor voltage v_{C2} across the secondary capacitor C2 and the voltage v_{RL} across the power storage unit represented as a load RL.

The controller 35 is configured to provide pulses P1 to P4 to the driver 24 so as to apply the following switching strategy: the switches of the inverter 23 are set in a first position (opened or respectively closed) when the instantaneous inductor current i₂ in the secondary inductor L2 passes through zero in one direction (zero-crossing switching) and in a second position (closed, respectively opened) when the instantaneous inductor voltage v_{L2} across the secondary inductor L2 reaches a voltage reference v_{R} or when a quantity representative of a total instantaneous power w₂=i_{2*}v_{L2} stored in the secondary inductor L2 reaches a power reference w_{R} (controlled switching).

It will be noted that implementing the controlled switching based on comparing the instantaneous inductor voltage across the primary or the secondary inductor with a voltage reference is equivalent to implementing the controlled switching based on comparing a quantity representative of a total instantaneous power stored in the primary or the secondary inductor with a power reference. Other equivalent alternatives can be used and the attached claims shall be interpreted as covering such equivalent alternatives.

The transmitter and the receiver can receive the voltage or power reference v_{R} or w_{R} from the vehicle (for example it can be set by the user of the vehicle) or from a network operator to regulate the amount of power being transmitted from the transmitter to the receiver.

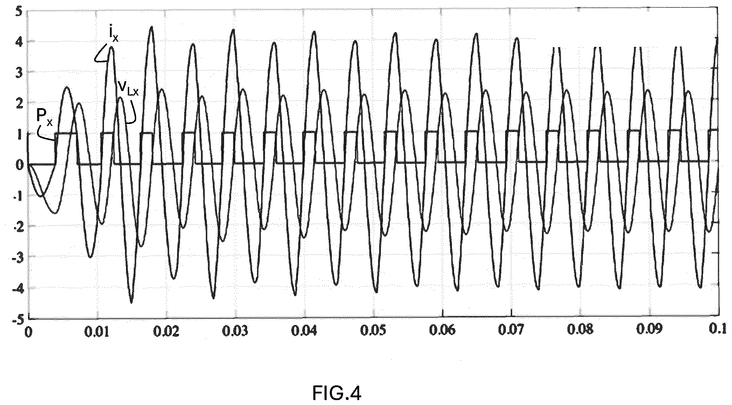

FIG.4 is shows the curve of the normalized value of the inductor current i_{X} across the primary or the secondary inductor, the curve of the normalized value of the inductor voltage v_{Lx} across the primary or the secondary inductor and the pulse P_{X} provided as command to drive one of the pair of switches of the inverter 23. In this example, the pulse Px transitions from 0 to 1 when the inductor current i_{X} goes from a negative value to a positive value (zero-crossing switching) and transitions from 1 to 0 when the normalized value of the inductor voltage reaches 1. The other pair of switches is driven by pulses in opposite phase to pulse Pₓ.

The functional diagrams presented here represent conceptual views given as non-limiting examples to illustrate the principles of this disclosure. These principles can be implemented in transmitters and receivers with multiple variants. For example, the transmitter may comprise several associations of an inverter and a driver, which can be controlled by the same controller. As will be apparent to those skilled in the art, many other structural variants can be used without impacting the implementation of the transmitter, receiver and method described in this application.

The terminology used here is solely for the purpose of describing particular embodiments and is not limiting. Notably, the terms 'comprises,' 'comprising,' 'includes,' and 'including,' specify the presence of stated features, steps, operations, elements, and/or components, but do not exclude the presence or addition of one or more other features, steps, operations, elements, components. Furthermore, when an element is said to be 'connected,' 'coupled,' or 'linked' to another element, it can be directly connected, coupled, or linked to the other element, or intermediary elements may be present. Other terms used to describe the relationship between two elements should be interpreted in the same way."

## Claims

1. A transmitter (20, 30) for wirelessly charging a power storage unit of an electric vehicle, the electric vehicle comprising a receiver (22, 32) comprising at least one secondary capacitor (C2) and one secondary inductor (L2), the transmitter comprising at least one primary capacitor (C1), at least one primary inductor (L1), and at least one inverter (23) associated with a driver (24), the inverter comprising at least one branch of switches (SW1, SW2, SW3, SW4) controlled by the driver to wirelessly transfer power from the transmitter (20, 30) to the receiver (22, 32), **characterized in that** the driver (24) is configured to receive commands from a controller (25, 35) to set the switches (SW1, SW2, SW3, SW4) of the inverter (23) in a first position when the instantaneous inductor current (i₁, i₂) in the primary or in the secondary inductor passes through zero in one direction, and in a second position when the instantaneous inductor voltage (v_{L1}, v_{L2}) across the primary or the secondary inductor (L1, L2) reaches a voltage reference or when a quantity representative of a total instantaneous power stored in the primary or in the secondary inductor (L1, L2) reaches a power reference.

2. The transmitter of claim 1, wherein the controller is in the transmitter, and the transmitter further comprises a current sensor to obtain an instantaneous current (i₁) in the primary inductor (L1), and a first voltage sensor to obtain an instantaneous inductor voltage (v_{L1}) across the primary inductor (L1).

3. The transmitter of claim 2, further comprising a second voltage sensor to obtain an instantaneous capacitor voltage (v_{C1}) across the primary capacitor (C1), the controller (25) being configured to calculate a backup for the instantaneous inductor voltage (v_{L1}) across the primary inductor (L1) by adding the instantaneous capacitor voltage (v_{C1}) across the primary capacitor (C1) and the voltage (v_{AB}) across the inverter.

4. The transmitter of claim 1, wherein the controller (25) is in the transmitter (20), further comprising a current sensor to obtain the instantaneous current (i₁) in the primary inductor (L1) and in the primary capacitor (C1), the controller being configured to:
- calculate an instantaneous capacitor voltage (v_{C1}) across the primary capacitor (C1) from the instantaneous current (i₁) in the primary capacitor (C1),
- calculate the instantaneous inductor voltage (v_{L1}) across the primary inductor (L1) by adding the instantaneous capacitor voltage (v_{C1}) across the primary capacitor (C1) and the voltage (v_{AB}) across the inverter (23).

5. The transmitter of any of claims 2 to 4, wherein the controller (25) is configured to calculate the quantity representative of the total instantaneous power stored in the primary inductor (L1) from at least the instantaneous inductor current (i₁) and the instantaneous inductor voltage (v_{L1}).

6. The transmitter of any of claims 1 to 5, **characterized in that** it the controller (25) is further configured to receive the power or the voltage reference from the vehicle.

7. The transmitter of any of claims 1 to 5, **characterized in that** it the controller (25) is further configured to receive the power reference or the voltage reference from a network manager.

8. The transmitter of any of claims 1 to 7, integrated into a roadway for wirelessly charging the power storage unit of a vehicle when the vehicle passes over the transmitter.

9. A roadway comprising a plurality of transmitters according to any of claims 1 to 8 for wirelessly charging the power storage unit of a vehicle when the vehicle passes over the transmitters.

10. A receiver (32) comprising at least one secondary capacitor (C2) and one secondary inductor (L2), for wirelessly charging a power storage unit of an electric vehicle when the vehicle is over a transmitter (30), the transmitter comprising at least one primary capacitor (C1) , at least one primary inductor (L1), and at least one inverter (23) associated with a driver (24), the inverter comprising at least one branch of switches (SW1, SW2; SW3, SW4) controlled by the driver (24) to wirelessly transfer power from the transmitter (30) to the receiver (32), **characterized in that** the receiver (32) comprises a controller (35) configured to generate commands for the driver (24) to set the switches (SW1, SW2; SW3, SW4) of the inverter (23) in a first position when the instantaneous inductor current (i₂) in the secondary inductor (L2) passes through zero in one direction and in a second position when the instantaneous inductor voltage (v_{L2}) across the secondary inductor (L2) reaches a voltage reference, or when a quantity representative of a total instantaneous power stored in the secondary inductor (L2) reaches a power reference.

11. The receiver of claim 10, comprising a current sensor to obtain an instantaneous inductor current (i₂) flowing through the secondary inductor (L2), and a first voltage sensor to obtain an instantaneous inductor voltage (v_{L2}) across the secondary inductor (L2).

12. The receiver of claim 11, further comprising a second voltage sensor to obtain an instantaneous capacitor voltage (v_{C2}) across the secondary capacitor (C2), the processor being configured to calculate a backup for the instantaneous inductor voltage (v_{L2}) across the secondary inductor (L2) by adding the instantaneous capacitor voltage (v_{C2}) across the secondary capacitor (C2) and the voltage (v_{RL}) across the power storage unit.

13. The receiver of claim 10, further comprising a current sensor to obtain the instantaneous current (i₂) in the secondary inductor (L2) and in the secondary capacitor (C2), the controller (35) being configured to:
- calculate an instantaneous capacitor voltage (v_{C2}) across the secondary capacitor (C2) from the instantaneous current (i₂) in the secondary capacitor (C2),
- calculate the instantaneous inductor voltage (v_{L2}) across the secondary inductor (L2) by adding the instantaneous capacitor voltage (v_{C2}) across the secondary capacitor (C2) and the voltage (v_{RL}) across the power storage unit (R_{L}).

14. The receiver of any of claims 11 to 13, wherein the controller (35) is configured to calculate the quantity representative of the total instantaneous power stored in the secondary inductor (L2) from at least the instantaneous inductor current (i₂) and the instantaneous inductor voltage (v_{L2}).

15. An electric vehicle comprising a receiver as claimed in any of claims 10 to 14.

16. The electrical Vehicle of claim 15, configured to provide the voltage or the power reference to the receiver.

17. An electric vehicle comprising a receiver (22), the receiver comprising at least one secondary capacitor (C2) and one secondary inductor (L2), for wirelessly charging a power storage unit of the electric vehicle when the vehicle is over the transmitter of any of claims 1 to 8 wherein the controller (25) is in the transmitter (22), the electrical vehicle being configured to provide the voltage or the power reference to the transmitter.

18. A method for controlling a transmitter (20, 30) for wirelessly charging a power storage unit of an electric vehicle, the electric vehicle comprising a receiver (22, 32) comprising at least one secondary capacitor (C2) and one secondary inductor (L2), the transmitter comprising at least one primary capacitor (C1), at least one primary inductor (L1), an inverter (23), and a driver (24), the inverter (23) comprising at least one branch of switches (SW1, SW2, SW3, SW4) controlled by the driver (24) to wirelessly transfer power from the transmitter (20, 30) to the receiver (22, 32), **characterized in that** the method comprises receiving by the driver (24), from a controller (25, 35) in the transmitter (20) or in the receiver (32), commands to set the switches of the inverter (23) in a first position when the instantaneous inductor current (i₁, i₂) in the primary or the secondary inductor (L1, L2) passes through zero in one direction, and in a second position when the instantaneous inductor voltage (v_{L1}, v_{L2}) across the primary or the secondary inductor (L1, L2) reaches a voltage reference or when a quantity representative of a total instantaneous power stored in the primary or in the secondary inductor (L1, L2) reaches a power reference.

19. A method for controlling a transmitter (30) for wirelessly charging a power storage unit of an electric vehicle, the electric vehicle comprising a receiver (32) comprising at least one secondary capacitor (C2) and one secondary inductor (L2), the transmitter (30) comprising at least one primary capacitor (C1), at least one primary inductor (L1), an inverter (23), and a driver (24), the inverter (23) comprising at least one branch of switches (SW1, SW2, SW3, SW4) controlled by the driver (24) to wirelessly transfer power from the transmitter (30) to the receiver (32), **characterized in that** the method comprises sending to the driver (24), from a controller (35) in the receiver (32), commands to set the switches of the inverter (23) in a first position when the instantaneous inductor current (i2) in the secondary inductor (L2) passes through zero in one direction, and in a second position when the instantaneous inductor voltage (vL2) across the secondary inductor (L2) reaches a voltage reference or when a quantity representative of a total instantaneous power stored in the secondary inductor (L2) reaches a power reference.
